# EUROPÄISCHE PATENTANMELDUNG

(11) **EP 4 556 878 A1**
(43) Veröffentlichungstag der Anmeldung: **21.05.2025**
(21) Anmeldenummer: 24202585.6
(22) Anmeldetag: 25.09.2024
(51) Int. Cl.: G01M 17/007

(54) **VORRICHTUNG ZUR KRAFTEINLEITUNG IN EIN TESTOBJEKT**

(30) Priorität: 14.11.2023 DE 102023131734
(71) Anmelder: Illinois Tool Works Inc., Glenview IL 60025 (US)
(72) Erfinder: JUNG, Gerald, Glenview, Illinios, 60025 (US); CLÜSSERATH, Alfred, Glenview Illinios, 60025 (US)
(74) Vertreter: Meissner Bolte Partnerschaft mbB

(57) **Zusammenfassung**

Die vorliegende Erfindung betrifft eine Vorrichtung (100) zur Krafteinleitung in ein Test-Fahrzeug, wobei die Vorrichtung (100) Folgendes aufweist: ein Radadapterelement (102), welches dazu ausgebildet ist mit einem Test-Fahrzeug verbunden zu werden; erste bis dritte Belastungsanordnungen (104, 108, 110) zum Bewegen des Radadapterelements (102) in drei translatorischen Freiheitsgraden; sowie eine vierte Belastungsanordnung (106) zum Rotieren des Radadapterelements (102) um eine Radachse (A), wobei die erste, zweite und dritte Belastungsanordnung (104, 108, 110) über einen gemeinsamen Dreigelenkknoten (130) mit dem Radadapterelement (102) verbunden sind.

## Beschreibung

Die vorliegende Erfindung betrifft eine Vorrichtung zur Krafteinleitung in ein Test-Fahrzeug, insbesondere zum Simulieren von im Fahrbetrieb in ein Kraftfahrzeug oder in Teile eines Kraftfahrzeugs eingeleiteten Kräften bzw. Momenten.

Fahrdynamik, Fahrkomfort und Fahrsicherheit sind Kernelemente bei der Fahrzeugentwicklung. Das Fahrwerk spielt dabei eine entscheidende Rolle. Es hat die Aufgabe, die Fahrzeugmasse abzustützen, zu federn, Schwingungen und Geräusche zu dämpfen, externe Störgrößen zu kompensieren, das Antriebsmoment auf die Fahrbahn zu bringen und die Räder zu lagern, zu führen, zu lenken und zu bremsen. Neben dieser Vielfalt an Aufgaben, ist das Fahrwerk zudem komplexen Belastungen ausgesetzt, denen auch die Vielzahl von eingesetzten aktiven und adaptiven Fahrwerkkomponenten standhalten müssen. Steigende Ansprüche erfordern eine stetige Weiterentwicklung und Optimierung von Fahrwerkskomponenten, Karosserie und Anbauteilen, um den Einfluss von Fahrbahnverhältnissen zu minimieren, Gewicht und Kosten zu reduzieren und zeitgleich die Lebensdauer und Sicherheit zu erhöhen.

Einerseits können derartige Einflüsse auf die Fahrwerkskomponenten durch Langzeit-Tests (z.B. Testfahrten) überprüft werden. Um einen Lebenszyklus eines Fahrzeugs zu simulieren ist es jedoch notwendig, mehrere hunderttausend Kilometer Fahrbetrieb zu testen. Hierfür wären selbst bei durchgehenden Testfahrten mehrere Monate notwendig. Aus den oben genannten Gründen kommen "Prüfstände" zum Einsatz, welche die im realen Fahrbetrieb auftretenden Kräfte und Belastungen möglichst wirklichkeitsgetreu nachbilden können. Derartige Prüfstände können die über mehrere hunderttausend Kilometer auftretenden Kräfte und Belastungen innerhalb weniger Tage/Wochen simulieren.

"Prüfstände" dienen in der Regel dazu, am Ende eines betriebsfestigkeitsbezogenen Absicherungsprozesses, die im realen Fahrbetrieb auftretenden und auf ein zu prüfendes Fahrzeug bzw. auf Teile eines zu prüfenden Fahrzeugs wirkenden Kräfte und Belastungen möglichst wirklichkeitsgetreu nachzubilden. Hierzu werden reale Betriebslasten nach Fahrversuche auf Achs- bzw. Gesamtfahrzeugprüfständen durchgeführt, um Rückschlüsse der Auswirkungen bestimmter Belastungen, vor allem auf die Betriebsfestigkeit und das Schwingverhalten des Fahrzeugs, ziehen zu können.

Durch derartige Prüfstände können bereits in einem Frühentwicklungsstadium, ohne auf fahrfähige Gesamtfahrzeuge angewiesen zu sein, Untersuchungen von Fahrwerksystemen unter verschiedenen Fahrzuständen und Fahrbahnverhältnissen durchgeführt werden.

Prüfstände simulieren die im Fahrbetrieb auf das Fahrwerk, die Karosserie und Anbauteile einwirkenden Belastungen. Vertikalbewegungen, hervorgerufen durch Fahrbahnunebenheiten, Kräfte, Momente und Bewegungen erzeugt durch Fahrzeugmanöver werden möglichst realitätsnah nachgebildet. Auch Umwelteinflüsse, wie Temperatur und korrosive Effekte, können parallel simuliert werden. Aktive und adaptive Fahrwerkskomponenten können dabei über entsprechende Schnittstellen der Prüfstandelektronik synchron in den Prüfablauf integriert werden.

Die aus dem Stand-der-Technik bekannten Prüfstände unterscheiden sich insbesondere durch die Art, mit welcher Kräfte in das Fahrwerk, die Karosserie und Anbauteile eingeleitet werden. So basiert eine erste Kategorie von Prüfständen auf Plattformen, auf denen je ein Reifen des Test-Fahrzeugs gelagert ist. Die Plattformen können in mehreren Freiheitsgraden bewegt werden, um Belastungen im Straßenverkehr zu simulieren. Andere Prüfstände verwenden Fließbänder bzw. Rollenbahnen, um die Fahrtbewegung zu simulieren. Schließlich existieren Prüfstände mit Radadapterelementen, welche durch eine Vielzahl an Linearantrieben im Raum beweglich sind. Die Radadapterelemente dienen als Simulation der in der Realität verwendeten Fahrzeugräder und werden während dem Test mit dem Fahrwerk des Test-Fahrzeugs verbunden, so dass die in das Radadapterelement eingeleiteten Kräfte direkt auf das Fahrwerk des Test-Fahrzeugs übertragen werden können.

Zwar ist es bei den aus dem Stand der Technik bekannten Prüfständen mit Radadapterelementen möglich, im Wesentlichen alle Kräfte, welche im Fahrbetrieb zu erwarten sind, zu simulieren. Jedoch führt beispielsweise die Simulation von Bremsmomenten häufig dazu, dass der Aufbau des Prüfstands kompliziert und teuer wird. Auch kann konstruktionsbedingt die Einleitung von Rotationskräften dazu führen, dass andere Kräfte wie beispielsweise translatorische Kräfte, nicht gleichzeitig in das Radadapterelement eingeleitet werden können.

Auf Grundlage der oben genannten Problemstellung, liegt der vorliegenden Erfindung die Aufgabe zu Grunde, eine Vorrichtung zur Krafteinleitung in ein Test-Fahrzeug anzugeben, welche einen möglichst effektiven und kostengünstigen Aufbau aufweist und die zu simulierenden Kräfte möglichst realitätsnah in das Radadapterelement und somit in das Fahrwerk, die Karosserie und/oder Anbauteile einleiten kann.

Die vorliegende Aufgabe wird durch den Gegenstand des unabhängigen Patentanspruchs 1 gelöst. Vorteilhafte Weiterbildungen der erfindungsgemäßen Vorrichtung sind in den abhängigen Patentansprüchen 2 bis 14 angegeben.

Dementsprechend betrifft die vorliegende Erfindung eine Vorrichtung zur Krafteinleitung in ein Test-Fahrzeug, wobei die Vorrichtung folgendes aufweist:
- ein Radadapterelement, welches dazu ausgebildet ist mit einem Test-Fahrzeug verbunden zu werden;
- eine erste Belastungsanordnung zum Bewegen des Radadapterelements in einer ersten, insbesondere translatorischen, Richtung;
- eine zweite Belastungsanordnung zum Bewegen des Radadapterelements in einer zweiten, insbesondere translatorischen, Richtung, wobei die zweite Richtung im Wesentlichen orthogonal zur ersten Richtung verläuft;
- eine dritte Belastungsanordnung zum Bewegen des Radadapterelements in einer dritten, insbesondere translatorischen, Richtung, wobei die dritte Richtung im Wesentlichen orthogonal zur ersten und zweiten Richtung verläuft;
- eine vierte Belastungsanordnung zum Rotieren des Radadapterelements um eine Radachse, welche parallel zur dritten Richtung verläuft,
wobei die erste, zweite und dritte Belastungsanordnung über einen gemeinsamen Dreigelenkknoten mit dem Radadapterelement verbunden sind.

Durch die Einleitung der Momente für die translatorischen Bewegungen über einen Dreigelenkknoten, lassen sich die im Straßenverkehr gegebenen Belastungen besonders realitätsnah simulieren, da die Kräfte/Bewegungen insbesondere über einen Punkt (Simulation der Kontaktstelle zwischen Rad und Fahroberfläche) eingebracht werden können. Gleichzeitig wird durch die separate, vierte Belastungsanordnung ermöglicht, dass Bremsmomente direkt und ohne Beeinflussung der translatorischen Kräfte in das Test-Fahrzeug eingeleitet werden können. Somit lassen sich auf einfache Weise besonders realitätsnahe Fahrsituationen nachstellen.

Nach einer weiteren Ausführungsform weist die erste Belastungsanordnung ein Übertragungselement auf, welches ein erstes Ende, das mit dem Dreigelenkknoten verbunden ist, und ein gegenüberliegendes, zweites Ende, das mit einem ersten Aktuator verbunden oder verbindbar ist, aufweist, wobei die vierte Belastungsanordnung ein erstes Übertragungselement aufweist, welches parallel zum Übertragungselement der ersten Belastungsanordnung angeordnet ist. Wie dies später näher erläutert werden wird, kann durch die parallele Anordnung der Übertragungselemente der ersten und zweiten Belastungsanordnung auf einfache Weise erzielt werden, dass die vierte Belastungsanordnung den durch die erste bis dritte Belastungsanordnung eingebrachten Bewegungen folgen kann, ohne diese einzuschränken bzw. zu blockieren. Die vierte Belastungsanordnung kann insbesondere separat betätigt werden.

Nach einer weiteren Ausführungsform weist das erste Übertragungselement der vierten Belastungsanordnung ein erstes Ende, das mit einem Außenumfang des Radadapterelements verbunden ist, und ein gegenüberliegendes, zweites Ende, das mit einem vierten Aktuator verbunden oder verbindbar ist, auf. Durch die Anbringung des ersten Übertragungselements der vierten Belastungsanordnung am Außenumfang des Fahradapterelements können Bremsmomente besonders effektiv in das Radadapterelement eingebracht werden. Dies kann beispielsweise durch einen Linearaktuator erfolgen, welcher mit dem zweiten Ende des Übertragungselements der vierten Belastungsanordnung verbunden ist.

Gemäß einer weiteren Ausführungsform ist das Übertragungselement der ersten und/oder vierten Belastungsanordnung als Stange ausgebildet.

Nach einer weiteren Ausführungsform weist die erste Belastungsanordnung ein Hebelelement, insbesondere einen Winkelhebel, auf, welches zwischen dem ersten Aktuator und dem Übertragungselement der ersten Belastungsanordnung angeordnet ist, wobei das Hebelelement mit Hilfe des ersten Aktuators um eine erste Achse verschwenkbar ist, um das Radadapterelement in der ersten Richtung zu bewegen.

Nach einer weiteren Ausführungsform weist die vierte Belastungsanordnung ein erstes Hebelelement, insbesondere einen zweiarmigen Hebel, auf, welches zwischen dem vierten Aktuator und dem Übertragungselement der vierten Belastungsanordnung angeordnet ist, wobei das erste Hebelelement mit Hilfe des vierten Aktuators um die erste Achse verschwenkbar ist, um das Radadapterelement um die Radachse zu rotieren. Durch die Anordnung des ersten Hebelelements der vierten Belastungsanordnung und des Hebelelements der ersten Belastungsanordnung auf derselben (ersten) Achse, kann eine Synchronisierung der Bewegung der Übertragungselemente der ersten und vierten Belastungsanordnung entlang der ersten Richtung erzielt werden. Mit anderen Worten, die Übertragungselemente der ersten und vierten Belastungsanordnung bewegen sich zu jeder Zeit gleichzeitig in vertikaler Richtung, insbesondere bei Ansteuerung des Aktuators der ersten Belastungsanordnung. Dagegen führt eine Ansteuerung des vierten Aktuators ausschließlich zur Bewegung des Übertragungselements der vierten Belastungsanordnung, wie dies später näher erläutert werden wird.

Nach einer weiteren Ausführungsform weist das Hebelelement der ersten Belastungsanordnung einen ersten Hebelarm, der mit dem ersten Aktuator verbunden oder verbindbar ist, und einen zweiten Hebelarm, der über eine zweite Achse schwenkbar mit dem zweiten Ende des Übertragungselements der ersten Belastungsanordnung verbunden ist, auf, wobei die vierte Belastungsanordnung ein zweites Hebelelement, insbesondere einen Winkelhebel, aufweist, welches um die zweite Achse verschwenkbar ist. Die Kinematik der ersten Belastungsanordnung steht demnach mit der Kinematik der zweiten Belastungsanordnung an zwei Achsen in Verbindung.

Nach einer weiteren Ausführungsform weist das erste Hebelelement der vierten Belastungsanordnung einen ersten Hebelarm, der mit dem vierten Aktuator verbunden oder verbindbar ist, und einen zweiten Hebelarm, der über ein zweites Übertragungselement mit einem ersten Hebelarm des zweiten Hebelelements verbunden ist, auf. Durch die oben genannte Ausführung der ersten und zweiten Hebelelemente der vierten Belastungsanordnung gegenüber dem Hebelelement der ersten Belastungsanordnung wird ein Viergelenkgestänge erzeugt, welches sicherstellt, dass das erste Übertragungselement der vierten Belastungsanordnung zu jeder Zeit parallel zum Übertragungselement der ersten Belastungsanordnung ausgerichtet ist.

Nach einer weiteren Ausführungsform weist das zweite Hebelelement der vierten Belastungsanordnung einen zweiten Hebelarm auf, der schwenkbar mit dem zweiten Ende des ersten Übertragungselements der vierten Belastungsanordnung verbunden ist.

Nach einer weiteren Ausführungsform ist das Übertragungselement der ersten Belastungsanordnung derart ausgebildet, dass eine Längsachse des Übertragungselements, insbesondere in einer Ruhelage der Vorrichtung, durch einen Mittelpunkt des Radadapterelements verläuft. Mit anderen Worten befindet sich das Übertragungselement der ersten Belastungsanordnung vertikal unterhalb dem Radadapterelement. Auch während der Bewegung des Radadapterelements ist das Übertragungselement der ersten Belastungsanordnung zu jeder Zeit im Wesentlichen in Richtung des Mittelpunkts des Radadapterelements ausgerichtet. Hierdurch lässt sich eine besonders realitätsgetreue Krafteinleitung in das Radadapterelement simulieren.

Nach einer weiteren Ausführungsform ist das Übertragungselement der ersten Belastungsanordnung als einzelne Stange ausgebildet. Die einzelne Stange verläuft zwischen dem Dreigelenkknoten und dem Hebelelement der ersten Belastungsanordnung parallel zu einem vorzugsweise ebenfalls als Stange ausgebildeten, ersten Übertragungselement der vierten Belastungsanordnung. Einerseits lässt sich durch die Ausbildung des ersten Übertragungselements als einzelne Stange erreichen, dass die vertikalen Kräfte (Kräfte in erster Richtung) an einem Punkt in das Radadapterelement eingebracht werden können, um möglichst realistische Fahrtsimulationen zu erzeugen. Andererseits wird hierdurch die Kinematik der ersten Belastungsanordnung erheblich vereinfacht.

Nach einer weiteren Ausführungsform ist der Dreigelenkknoten mit einem unteren Endbereich des Radadapterelements verbunden. Hierdurch lassen sich alle translatorischen Kräfte gleichzeitig über einen einzelnen Punkt, nämlich den Dreigelenkknoten, in das Radadapterelement übertragen. Dies entspricht insbesondere besonders genau reellen Fahrbedingungen, da auch hier die Reifen zu jedem Zeitpunkt lediglich mit der Unterseite in Fahrbahnkontakt stehen.

Nach einer weiteren Ausführungsform sind die erste und vierte Belastungsanordnung derart entkoppelt, dass eine Bewegung des Radadapterelements in der ersten Richtung unabhängig von einer Rotation des Radadapterelements und vice versa erfolgt.

Nach einer weiteren Ausführungsform weist die erste und vierte Belastungsanordnung je separat ansteuerbare Aktuatoren, insbesondere Linearaktuatoren, auf. Somit ist es jederzeit möglich, ein Bremsmoment entweder gleichzeitig oder separat zu den mit den ersten bis dritten Belastungsanordnungen erzeugten translatorischen Bewegungen einzuleiten. Die Bremskrafteinleitung ist dementsprechend komplett unabhängig von den durch die ersten bis dritten Belastungsanordnungen erzeugten translatorischen Bewegungen.

Im Folgenden wird die vorliegende Erfindung mit Bezug auf die in den Figuren dargestellte Ausführungsform näher beschrieben. Dabei zeigen:
- FIG. 1: eine schematische, perspektivische Ansicht einer Vorrichtung zur Krafteinleitung in ein Test-Fahrzeug gemäß einer Ausführungsform der vorliegenden Erfindung; und
- FIG. 2: eine schematische Frontalansicht der Vorrichtung gemäß FIG. 1, ohne Befestigungsanker.

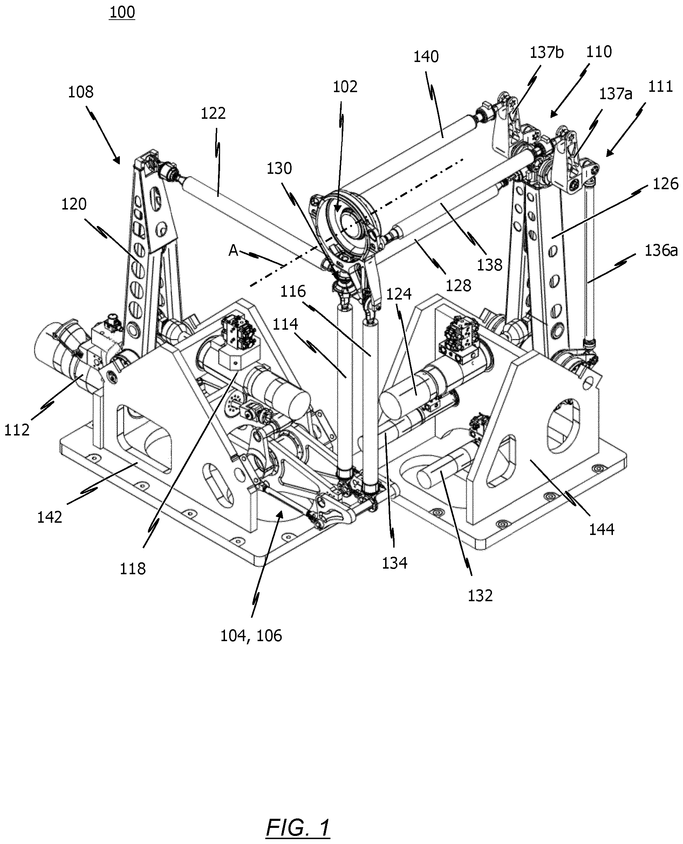

Der FIG. 1 ist eine perspektivische Ansicht einer Vorrichtung zur Krafteinleitung in ein Test-Fahrzeug gemäß einer Ausführungsform der vorliegenden Erfindung zu entnehmen. Die Vorrichtung 100 dient dazu ein Radadapterelement 102 in mehreren Freiheitsgraden zu bewegen. Insbesondere kann durch die Vorrichtung 100 das Radadapterelement 102 in sechs Freiheitsgraden bewegt werden.

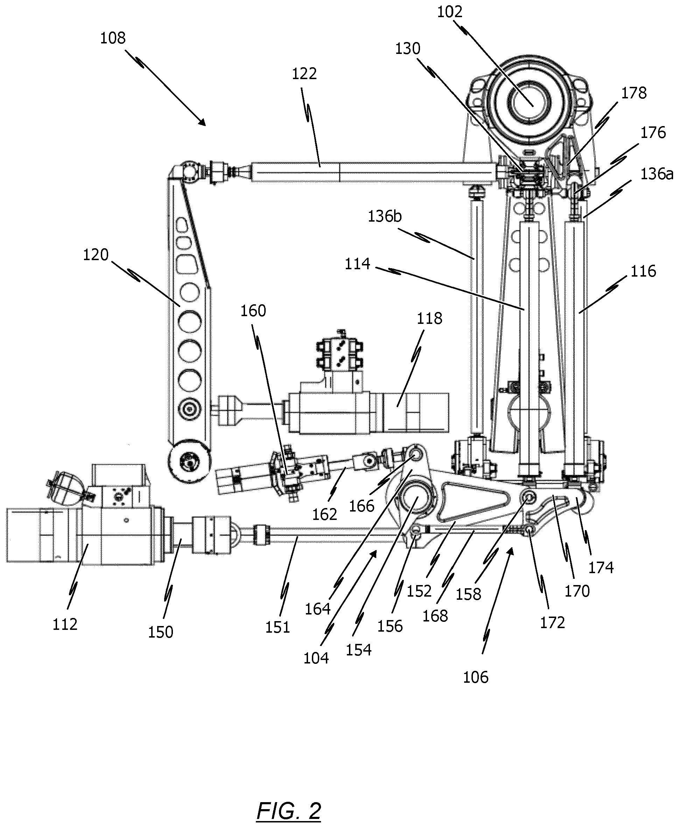

Die Vorrichtung 100 kann Teil eines Prüfstands zum Simulieren von Fahrwerkbelastungen während der Fahrt sein. Beispielsweise kann ein derartiger Prüfstand vier Vorrichtungen gemäß FIG. 1 enthalten, je eine Vorrichtung pro Rad des Test-Fahrzeugs. Im Folgenden soll anhand der FIGs. 1 und 2 lediglich eine einzelne Vorrichtung zur Krafteinleitung beschrieben werden. Die Funktion der verbleibenden Vorrichtungen zur Krafteinleitung ergibt sich analog. Selbstverständlich wird die Ansteuerung der Aktuatoren in den Vorrichtungen 100 eines Prüfstands miteinander synchronisiert, um die gewünschte Belastung auf das Fahrwerk des Test-Fahrzeugs zu erzeugen.

Obwohl dies in FIG. 1 nicht gezeigt ist, wird bei der Verwendung der Vorrichtung 100 das Test-Fahrzeug mit dem Radadapterelement 102 verbunden. Insbesondere wird das Fahrwerk, wie beispielsweise die Vorder- oder Hinterachse, vor Testbeginn mit dem Radadapterelement 102 verbunden.

Die Vorrichtung 100 weist eine erste Belastungsanordnung 104 zum Bewegen des Radadapterelements 102 in einer ersten, translatorischen Richtung auf. In der hier dargestellten Ausführungsform handelt es sich bei der ersten Richtung um die Vertikale.

Die Vorrichtung 100 weist ferner eine zweite Belastungsanordnung 108 zum Bewegen des Radadapterelements 102 in einer zweiten, translatorischen Richtung auf. In der hier dargestellten Ausführungsform handelt es sich bei der zweiten Richtung um eine Längsrichtung, welche im Betrieb parallel zur Längsachse des Test-Fahrzeugs ist. Die zweite, translatorische Richtung ist dementsprechend im Wesentlichen senkrecht zur ersten Richtung.

Eine dritte Belastungsanordnung 110 der Vorrichtung 100 zur Krafteinleitung in ein Test-Fahrzeug dient zum Bewegen des Radadapterelements 102 in einer dritten, translatorischen Richtung. Bei der dritten Richtung handelt es sich im hier dargestellten Ausführungsbeispiel um eine laterale Bewegungsrichtung. Die dritte Richtung verläuft im Wesentlichen senkrecht zur ersten und zweiten Richtung. Zusammenfassend wird durch die erste, zweite und dritte Belastungsanordnung 104, 108, 110 gewährleistet, dass das Radadapterelement 102 in allen drei translatorischen Bewegungsrichtungen bewegbar ist.

Die Vorrichtung 100 weist eine vierte Belastungsanordnung zum Rotieren des Radadapterelements 102 auf. Insbesondere kann die vierte Belastungsanordnung 106 dazu verwendet werden, das Radadapterelement um die Radachse A zu drehen und damit ein Bremsmoment zu simulieren. Die Radachse A verläuft ins-besondere parallel zur dritten Richtung. In der hier dargestellten Ausführungsform erstreckt sich die Radachse A in lateraler Richtung.

Die Vorrichtung 100 weist ferner eine fünfte Belastungsanordnung 111 auf, welche zur Einleitung von Lenkmomenten in das Radadapterelement 102 dient. Bei dem Lenkmoment handelt es sich um eine Rotation des Radadapterelements 102 um eine Vertikalachse (nicht dargestellt), die durch den Mittelpunkt des Radadapterelements 102 verläuft und die Radachse A senkrecht schneidet.

Durch die Kombination der dritten und fünften Belastungsanordnung 110, 111 ebenfalls ein Sturzmoment in das Radadapterelement 102 eingeleitet werden. Bei einem Stutzmoment handelt es sich um eine Rotation des Radadapterelements 102 um eine zu der Radachse A und der Vertikalachse (nicht dargestellt) senkrechte Querachse, welche parallel zur Längsachse des Test-Fahrzeugs verläuft.

In der hier dargestellten Ausführungsform sind die ersten, zweiten und vierten Belastungsanordnungen 104, 106, 108 an einer ersten Verankerung 142 befestigt. Die dritten und fünften Belastungsanordnungen 110, 111 sind an einer zweiten Verankerung 144 befestigt. Die Verankerungen 142, 144 können beispielsweise an einer Bodenplatte befestigt werden, um die während dem Test auftretenden Gegenkräfte abzuleiten.

Der FIG. 2 ist eine Frontalansicht der in FIG. 1 dargestellten Vorrichtung 100 zu entnehmen, wobei zur besseren Übersicht die Verankerungen 142, 144 nicht dargestellt sind. Der FIG. 2 ist insbesondere zu entnehmen, dass die erste Belastungsanordnung 104 einen ersten Aktuator 112, insbesondere einen Linearantrieb, aufweist. Der erste Aktuator 112 kann beispielsweise als hydraulischer, elektrischer oder pneumatischer Linearantrieb ausgebildet sein.

Der erste Aktuator 112 weist eine Antriebsstange 150 auf, welche mit einem Hebelelement 152 der ersten Belastungsanordnung 104 verbunden ist. Insbesondere ist die Antriebsstange 150 über eine Koppelstange 151 mit dem Hebelelement 152 gelenkig verbunden. Das Hebelelement 152 ist in diesem Beispiel als Winkelhebel ausgebildet. Das Hebelelement 152 ist um eine erste Achse 154 verschwenkbar. Die Antriebsstange 150 ist an ihrem distalen Ende mit einem Gelenk 156 eines ersten Hebelarms des Hebelelements 152 verbunden. Ein zweiter Hebelarm des Hebelelements 152 ist über ein Gelenk mit einem zweiten Ende eines Übertragungselements 114 der ersten Belastungsanordnung 104 verbunden. Das Gelenk zwischen dem zweiten Hebelarm des Hebelelements 152 und dem Übertragungselement 114 weist eine zweite Schwenkachse 158 auf.

Das Übertragungselement 114 ist insbesondere zwischen einem Dreigelenkknoten 130 und dem zweiten Hebelarm des Hebelelements 152 angeordnet. Das Übertragungselement 114 ist in der hier dargestellten Ausführungsform als Stange ausgebildet. Das Übertragungselement 114 ist an seinem ersten Ende mit dem Dreigelenkknoten 130 gelenkig verbunden. Insbesondere kann das Übertragungselement 114 über ein Kugelgelenk mit entsprechenden Übertragungselementen 122, 128 der zweiten und dritten Belastungsanordnungen 108, 110 im Dreigelenkknoten 130 verbunden sein. An dem gegenüberliegenden, zweiten Ende des Übertragungselements 114, ist dieses gelenkig, beispielsweise über die Schwenkachse 158 mit dem Hebelelement 152 verbunden. Somit kann eine Bewegung des ersten Aktuators 112 über das Hebelelement 152 auf das Übertragungselement 114 der ersten Belastungsanordnung 104 auf das Dreiknotengelenk 130 und das damit verbundene Radadapterelement 102 übertragen werden, wie dies später näher erläutert werden wird.

Der FIG. 2 ist ferner ein exemplarischer Aufbau der vierten Belastungsanordnung 106 zu entnehmen. Die vierte Belastungsanordnung 106 weist einen vierten Aktuator 160 auf. Der vierte Aktuator 160 ist über die Antriebsstange 162 mit einem ersten Hebelelement 164 der vierten Belastungsanordnung 106 verbunden. Insbesondere ist ein distales Ende der Antriebsstange 162 über ein Schwenkgelenk 166 mit einem ersten Arm des ersten Hebelelements 164 verbunden. Auch das erste Hebelelement 164 ist an der ersten Achse 154 verschwenkbar angeordnet. Mit anderen Worten, die erste Achse 154 ist eine gemeinsame Achse des Hebelelements 152 der ersten Belastungsanordnung 104 und des ersten Hebelelements 164 der vierten Belastungsanordnung 106.

Ein zweiter Hebelarm des als zweiarmiger Hebel ausgebildeten ersten Hebelelements 164 der vierten Belastungsanordnung 106 ist mit einem Übertragungselement 168 gelenkig verbunden. Das Übertragungselement 168 verbindet den zweiten Hebelarm des ersten Hebelelements 164 mit einem ersten Hebelarm eines zweiten Hebelelements 170 der vierten Belastungsanordnung 106. Das Übertragungselement 168 ist insbesondere über ein Schwenkgelenk 172 mit dem zweiten Hebelelement 170 schwenkbar verbunden. Das zweite Hebelelement 170 ist um die zweite Achse 158 verschwenkbar.

Ein zweiter Hebelarm des als Winkelhebel ausgebildeten zweiten Hebelelements 170 ist mit einem zweiten Ende eines Übertragungselements 116 verbunden. In der hier dargestellten Ausführungsform ist das Übertragungselement 116 der vierten Belastungsanordnung 106 parallel zum Übertragungselement 114 der ersten Belastungsanordnung 104 ausgerichtet. In anderen, nicht dargestellten Ausführungsbeispielen kann das Übertragungselement der vierten Belastungsanordnung jedoch auch schräg gegenüber dem Übertragungselement der ersten Belastungsanordnung ausgerichtet sein.

Ein erstes Ende des Übertragungselements 116 ist mit einem Kugellager 176 verbunden. Das Kugellager 176 steht über ein Brückenelement 178 mit einem Außenumfang des Radadapterelements 102 in Verbindung. Mit anderen Worten, das Übertragungselement 116 der vierten Belastungsanordnung 106 ist über sein erstes Ende gelenkig mit dem Außenumfang des Radadapterelements 102 verbunden.

Durch die beiden gemeinsamen Achsen 154, 158 sowie die Gelenke 156, 172 wird ein Viergelenkgetriebe ausgebildet, welches sicherstellt, dass das zweite Hebelelement 170 der vierten Belastungsanordnung 106 seine in FIG. 2 dargestellte Ausrichtung beibehält, wenn das Übertragungselement 114 der ersten Belastungsanordnung 104 über das Hebelelement 152 in der ersten Richtung (vertikal) bewegt wird. Mit anderen Worten, das Übertragungselement 116 der vierten Belastungsanordnung bewegt sich bei Ansteuerung des ersten Aktuators 112 zusammen mit dem ersten Betätigungselement 114 der ersten Belastungsanordnung. Es kommt somit während der Ansteuerung der ersten Belastungsanordnung zu keiner Relativbewegung zwischen dem Betätigungselement 114 der ersten Belastungsanordnung 104 und dem ersten Betätigungselement 116 der zweiten Belastungsanordnung 106.

Der Darstellung gemäß FIG. 2 ist ferner ein beispielhafter Aufbau der zweiten Belastungsanordnung 108 zu entnehmen. Die zweite Belastungsanordnung 108 weist einen zweiten Aktuator 118 auf, welcher über ein Hebelelement 120 mit einem Übertragungselement 122 verbunden ist. Das Hebelelement 120 ist gemäß der hier dargestellten Ausführungsform als einarmiger Hebel dargestellt, welcher durch die Antriebsstange des zweiten Aktuators 118 verschwenkt werden kann. Das Übertragungselement 122 der zweiten Belastungsanordnung 108 ist an einem ersten Ende mit dem Kugelgelenk des Dreigelenkknotens 130 verbunden. An einem gegenüberliegenden, zweiten Ende ist das Übertragungselement 122 mit dem Hebelelement 120 gelenkig verbunden.

In der hier dargestellten Ausgangsstellung bzw. Ruheposition der Vorrichtung 100 ist das Übertragungselement 122 senkrecht zu den Übertragungselementen 114, 116 der ersten bzw. vierten Belastungsanordnung ausgerichtet. Wie oben bereits erwähnt, dient die zweite Belastungsanordnung 108 zum Eintrag von Bewegungen in Längsrichtung über das parallel zur Längsrichtung des Test-Fahrzeugs ausgerichtete Übertragungselement 122. Auch das Übertragungselement 122 ist als Übertragungsstange (Koppelstange) ausgebildet.

Zurückkommend auf die FIG. 1 sei angemerkt, dass die dritte Belastungsanordnung 110 einen im Wesentlichen identischen Aufbau zur zweiten Belastungsanordnung aufweist. Die dritte Belastungsanordnung 110 ist jedoch im Winkel von 90° gegenüber der zweiten Belastungsanordnung 108 angeordnet.

Die dritte Belastungsanordnung 110 weist einen dritten Aktuator 124 auf, welcher über ein Hebelelement 126 mit einem Übertragungselement 128 gelenkig verbunden ist. Das Übertragungselement 128 ist in der in den FIGs. 1 und 2 dargestellten Ruheposition der Vorrichtung 100 orthogonal zu den Übertragungselementen 114, 116, 122 der ersten, zweiten und vierten Belastungsanordnung angeordnet. Auch das Übertragungselement 128 der dritten Belastungsanordnung 110 ist an einem ersten Ende mit dem Kugelgelenk des Dreiknotengelenks 130 verbunden. An einem zweiten, gegenüberliegenden Ende ist das Übertragungselement 128 mit dem Hebelelement 126 verbunden. Auch das Hebelelement 126 ist in der hier dargestellten Ausführungsform als einarmiger Hebel ausgebildet.

Den FIGs. 1 und 2 ist schließlich auch eine fünfte Belastungsanordnung 111 zu entnehmen. Die fünfte Belastungsanordnung 111 weist einen fünften Aktuator 132 und einen sechsten Aktuator 134 auf. Der fünfte Aktuator 132 ist über ein Übertragungselement 136a mit einem Hebelelement 137a verbunden. Das Hebelelement 137a ist beispielsweise als Winkelhebel ausgebildet. Ein zweites Ende des Hebelelements 137a ist mit einem zweiten Übertragungselement 138 verbunden. Das zweite Übertragungselement 138 der fünften Belastungsanordnung 111 verbindet das Hebelelement 137a mit einem Außenumfang des Radadapterelements 102.

Der sechste Aktuator 134 ist über ein drittes Übertragungselement 136b mit einem Hebelelement 137b verbunden. Das Hebelelement 137b ist beispielsweise als Winkelhebel ausgebildet. Ein zweites Ende des Hebelelements 137b ist mit einem vierten Übertragungselement 140 der fünften Belastungsanordnung verbunden. Das zweite Übertragungselement 140 der fünften Belastungsanordnung 111 verbindet das Hebelelement 137a mit einem Außenumfang des Radadapterelements 102.

Das zweite und vierte Übertragungselement 138, 140 der fünften Belastungsanordnung 111 verlaufen in der hier dargestellten Ausführungsform parallel zueinander und parallel zur Radachse A des Radadapterelements 102. Alternativ ist es auch denkbar, das zweite und vierte Übertragungselement 138, 140 der fünften Belastungsanordnung 111 schräg zueinander auszurichten. Die beiden Übertragungselemente 138, 140 sind stangenförmig ausgebildet. Die beiden Übertragungselemente 138, 140 sind jeweils mit dem Außenumfang des Radadapterelements 102 verbunden, insbesondere an diametral gegenüberliegenden Seitenflächen des Radadapterelements 102. Dementsprechend kann durch eine gegenläufige Ansteuerung der fünften und sechsten Aktuatoren 132, 134 der fünften Belastungsanordnung 111 ein Lenkmoment, das heißt eine Rotation um eine Vertikalachse des Radadapterelements 102, in das Radadapterelement 102 eingeleitet werden.

Den FIGs. 1 und 2 ist ferner zu entnehmen, dass der Dreigelenkknoten 130, in welchem die Übertragungselemente 114, 122, 128 der ersten, zweiten und dritten Belastungsanordnung 104, 108, 110 miteinander verbunden sind, unterhalb des Radelements 102 angeordnet ist. Der Dreigelenkknoten 130 kann dementsprechend als Radaufstandspunkt des Radadapterelements 102 verstanden werden. Durch die Anordnung des Dreigelenkknotens 130 unterhalb des Radadapterelements 102 können besonders realistische Fahrtkräfte simuliert werden.

Im Betrieb ist es möglich, die oben genannten translatorischen und rotatorischen Bewegungen gleichzeitig und dennoch unabhängig voneinander in das Radadapterelement 102 einzuleiten. Nachfolgend sei insbesondere auf die durch die erste Belastungsanordnung 104 erzeugte Bewegung in Vertikalrichtung (erste Richtung) sowie die Drehung des Radelements 102 um die Radachse A mit Hilfe der vierten Belastungsanordnung 106 näher eingegangen.

Durch Ansteuerung des ersten Aktuators 112 kann eine Vertikalbewegung des Übertragungselements 114 und dementsprechend des Radadapterelements 102 erzielt werden. Insbesondere wird durch ein Ausfahren der Antriebsstange 150 ein Verschwenken des Hebelelements 152 entgegen dem in FIG. 2 dargestellten Uhrzeigersinn um die erste Achse 154 erzielt. Dementsprechend wird das Übertragungselement 114 der ersten Belastungsanordnung 104 in Richtung des Radadapterelements 102 (das heißt nach oben) bewegt. Über den Dreigelenkknoten wird diese Vertikalbewegung auf das Radadapterelement 102 übertragen.

Gleichzeitig mit der Vertikalbewegung des Übertragungselements 114, wird auch das beispielhaft parallel dazu angeordnete Übertragungselement 116 der vierten Belastungsanordnung 106 nach oben bewegt. Dies ist insbesondere deshalb der Fall, da das zweite Hebelelement 170 der vierten Belastungsanordnung 106 verschwenkbar an der zweiten Achse 158, das heißt dem Gelenk des Übertragungselements 114 der ersten Belastungsanordnung 104, angeordnet ist. Somit wird auch das zweite Hebelelement 170 bei Bewegung des Hebelelements 152 der ersten Belastungsanordnung 104 entgegen dem Uhrzeigersinn verschwenkt. Durch das oben genannte Viergelenkgetriebe wird jedoch gewährleistet, dass das zweite Hebelelement 170 auch während dem Verschwenken des ersten Hebelelements 152 der ersten Belastungsanordnung 104 in der in FIG. 2 gezeigten Ausrichtung verharrt. Mit anderen Worten, die überlagerte Kinematik zwischen den ersten und vierten Belastungsanordnungen 104, 106 gewährleistet, dass bei Ansteuerung der ersten Belastungsanordnung 104 die Bewegung der Übertragungselemente 114, 116 miteinander synchronisiert ist. Es kommt zu keiner Relativbewegung der Übertragungselemente 114, 116 zu einander, so lange der vierte Aktuator 160 der vierten Belastungsanordnung 106 nicht betätigt wird.

Bei Betätigung des vierten Aktuators 160 der vierten Belastungsanordnung 106 kommt es zum Verschwenken des zweiten Hebelelements 170 der vierten Belastungsanordnung 106 gegenüber dem Hebelelement 152 der ersten Belastungsanordnung 104. Folglich kommt es auch zu einer Relativbewegung des Übertragungselements 116 der vierten Belastungsanordnung 106 gegenüber dem Übertragungselement 114 der ersten Belastungsanordnung 104.

Im Einzelnen kann durch ein Ausfahren der Antriebsstange 162 des vierten Aktuators 160 eine Rotation des Radadapterelements 102 um die Radachse A im Uhrzeigersinn gemäß FIG. 2 erzielt werden. Hierzu wird zunächst das erste Hebelelement 164 durch die Antriebsstange 162 im Uhrzeigersinn um die erste Achse 154 verschwenkt. Das zweite Übertragungselement 168 der vierten Belastungsanordnung 106 überträgt diese Bewegung auf das zweite Hebelelement 170, welches somit ebenfalls im Uhrzeigersinn gemäß FIG. 2 gegenüber der zweiten Achse 158 und somit gegenüber dem Hebelelement 152 der ersten Belastungsanordnung 104 verschwenkt wird. Eine derartige Verschwenkung des zweiten Hebelelements 170 im Uhrzeigersinn gemäß FIG. 2 führt dazu, dass das erste Übertragungselement 116 der vierten Belastungsanordnung gegenüber dem Übertragungselement 114 der ersten Belastungsanordnung 104 verschoben wird. Insbesondere wird das Übertragungselement 116 in diesem Fall in der in FIG. 2 gezeigten Darstellung nach unten gezogen und überträgt ein Drehmoment auf das Radadapterelement 102, insbesondere über das Brückenelement 178. Das hervorgerufene Drehmoment bewirkt eine Rotation des Radadapterelements 102 im Uhrzeigersinn gemäß FIG. 2. Eine derartige Rotation dient der Simulation einer Bremskraft/Bremsbewegung des Fahrzeugs.

Die Bewegung der ersten und vierten Belastungsanordnung 104, 106 ist einerseits synchronisiert bezüglich der Vertikalbewegungen in der ersten Richtung. Zur Einleitung von Bremsmomenten ist die Bewegung der vierten Belastungsanordnung 160 jedoch von der ersten Belastungsanordnung 104 entkoppelt. Insbesondere kann es durch die Ansteuerung des vierten Aktuators 160 zu einer Relativbewegung zwischen den Übertragungselementen 114 der ersten Belastungsanordnung 104 und 116 der zweiten Belastungsanordnung 106 kommen, um Bremsmomente in das Radadapterelement 102 einzuleiten, ohne gleichzeitig eine Vertikalbewegung zu benötigen.

Die vorliegende Erfindung ist nicht auf die in den Figuren dargestellten Ausführungsformen beschränkt, sondern ergibt sich aus einer Kombination sämtlicher hierin offenbarter Merkmale.

## Patentansprüche

1. Vorrichtung (100) zur Krafteinleitung in ein Test-Fahrzeug, wobei die Vorrichtung (100) folgendes aufweist:
- Ein Radadapterelement (102), welches dazu ausgebildet ist mit einem Test-Fahrzeug verbunden zu werden;
- eine erste Belastungsanordnung (104) zum Bewegen des Radadapterelements (102) in einer ersten, insbesondere translatorischen, Richtung;
- eine zweite Belastungsanordnung (108) zum Bewegen des Radadapterelements (102) in einer zweiten, insbesondere translatorischen, Richtung, wobei die zweite Richtung im Wesentlichen orthogonal zur ersten Richtung verläuft;
- eine dritte Belastungsanordnung (110) zum Bewegen des Radadapterelements (102) in einer dritten, insbesondere translatorischen, Richtung, wobei die dritte Richtung im Wesentlichen orthogonal zur ersten und zweiten Richtung verläuft;
- eine vierte Belastungsanordnung (106) zum Rotieren des Radadapterelements (102) um eine Radachse (A), welche parallel zur dritten Richtung verläuft,
wobei die erste, zweite und dritte Belastungsanordnung (104, 108, 110) über einen gemeinsamen Dreigelenkknoten (130) mit dem Radadapterelement (102) verbunden sind.

2. Die Vorrichtung (100) nach Anspruch 1,
wobei die erste Belastungsanordnung (104) ein Übertragungselement (114) aufweist, welches ein erstes Ende, das mit dem Dreigelenkknoten (130) verbunden ist, und ein gegenüberliegendes, zweites Ende, das mit einem ersten Aktuator (112) verbunden oder verbindbar ist, aufweist, und wobei die vierte Belastungsanordnung (106) ein erstes Übertragungselement (116) aufweist, welches insbesondere parallel zum Übertragungselement (114) der ersten Belastungsanordnung (104) angeordnet ist.

3. Die Vorrichtung (100) nach Anspruch 2,
wobei das Übertragungselement (114) der ersten Belastungsanordnung (104) zumindest eine Stange aufweist.

4. Die Vorrichtung (100) nach Anspruch 2 oder 3,
wobei das erste Übertragungselement (116) der vierten Belastungsanordnung (106) ein erstes Ende, das mit einem Außenumfang des Radadapterelements (102) verbunden ist, und ein gegenüberliegendes, zweites Ende, das mit einem vierten Aktuator (160) verbunden oder verbindbar ist, aufweist.

5. Die Vorrichtung (100) nach einem der Ansprüche 2 bis 4,
wobei das Übertragungselement (114, 116) der ersten und/oder vierten Belastungsanordnung (106) als Stange ausgebildet ist.

6. Die Vorrichtung (100) nach einem der Ansprüche 1 bis 5,
wobei die erste Belastungsanordnung (104) ein Hebelelement (152), insbesondere einen Winkelhebel, aufweist, welches zwischen dem ersten Aktuator (112) und dem Übertragungselement (114) der ersten Belastungsanordnung (104) angeordnet ist, wobei das Hebelelement (152) mit Hilfe des ersten Aktuators (112) um eine erste Achse (154) verschwenkbar ist, um das Radadapterelement (102) in der ersten Richtung zu bewegen.

7. Die Vorrichtung (100) nach Anspruch 6,
wobei die vierte Belastungsanordnung (106) ein erstes Hebelelement (164), insbesondere einen zweiarmigen Hebel, aufweist, welches zwischen dem vierten Aktuator (160) und dem ersten Übertragungselement (116) der vierten Belastungsanordnung (106) angeordnet ist, wobei das erste Hebelelement (164) mit Hilfe des vierten Aktuators (160) um die erste Achse (154) verschwenkbar ist, um das Radadapterelement (102) um die Radachse (A) zu rotieren.

8. Die Vorrichtung (100) nach Anspruch 7,
wobei das Hebelelement (152) der ersten Belastungsanordnung (104) einen ersten Hebelarm, der mit dem ersten Aktuator (112) verbunden oder verbindbar ist, und einen zweiten Hebelarm, der über eine zweite Achse (158) schwenkbar mit dem zweiten Ende des Übertragungselements (114) der ersten Belastungsanordnung (104) verbunden ist, aufweist und wobei die vierte Belastungsanordnung (106) ein zweites Hebelelement (170), insbesondere einen Winkelhebel, aufweist, welches um die zweite Achse (158) verschwenkbar ist.

9. Die Vorrichtung (100) nach Anspruch 8,
wobei das erste Hebelelement (164) der vierten Belastungsanordnung (106) einen ersten Hebelarm, der mit dem vierten Aktuator (160) verbunden oder verbindbar ist, und einen zweiten Hebelarm, der über ein zweites Übertragungselement (168) mit einem ersten Hebelarm des zweiten Hebelelements (170) verbunden ist, aufweist.

10. Die Vorrichtung (100) nach Anspruch 9,
wobei das zweite Hebelelement (170) der vierten Belastungsanordnung (106) einen zweiten Hebelarm aufweist, der schwenkbar mit dem zweiten Ende des ersten Übertragungselements (116) der vierten Belastungsanordnung (106) verbunden ist.

11. Die Vorrichtung (100) nach einem der Ansprüche 2 bis 10,
wobei das Übertragungselement (114) der ersten Belastungsanordnung (104) derart ausgebildet ist, dass eine Längsachse des Übertragungselements (114) durch einen Mittelpunkt des Radadapterelements (102) verläuft.

12. Die Vorrichtung (100) nach einem der Ansprüche 1 bis 11,
wobei der Dreigelenkknoten (130) mit einem unteren Endbereich des Radadapterelements (102) verbunden ist.

13. Die Vorrichtung (100) nach einem der Ansprüche 1 bis 12,
wobei die erste und vierte Belastungsanordnung (104, 106) derart entkoppelt sind, dass eine Bewegung des Radadapterelements (102) in der ersten Richtung unabhängig von einer Rotation des Radadapterelements (102) und vice versa ist.

14. Die Vorrichtung (100) nach einem der Ansprüche 1 bis 13,
wobei die erste und vierte Belastungsanordnung (106) je separat ansteuerbare Aktuatoren (112, 160), insbesondere Linearaktuatoren, aufweisen.

15. Ein Prüfstand zum Simulieren von im Fahrbetrieb auftretenden Kräften und Belastungen in einem Test-Fahrzeug, wobei der Prüfstand je eine Vorrichtung gemäß einem der Ansprüche 1 bis 14 pro Rad des Test-Fahrzeugs aufweist.
